# EUROPÄISCHE PATENTSCHRIFT

(11) **EP 4 117 880 B1**
(45) Veröffentlichungstag und Bekanntmachung des Hinweises auf die Patenterteilung: **27.11.2024**
(21) Anmeldenummer: 20713217.6
(22) Anmeldetag: 13.03.2020
(51) Int. Cl.: B29B 15/08

(54) **VERFAHREN ZUR HERSTELLUNG EINER FASER ENTHALTENDEN LAGE SOWIE PREPREG**
METHOD FOR PRODUCING A LAYER CONTAINING FIBRES AND A PREPREG
PROCÉDÉ POUR FABRIQUER UNE COUCHE CONTENANT DES FIBRES ET UN PRÉIMPRÉGNÉ

(43) Veröffentlichungstag der Anmeldung: 18.01.2023
(73) Patentinhaber: Schunk Kohlenstofftechnik GmbH, 35452 Heuchelheim (DE)
(72) Erfinder: WAMSER, Thomas, 35452 Heuchelheim (DE); LAUER, Andreas, 35274 Kirchhain (DE); ZULAUF, Lukas, 35440 Linden (DE)
(74) Vertreter: Stoffregen, Hans-Herbert
(86) Internationale Anmeldenummer: PCT/EP2020/056950
(87) Internationale Veröffentlichungsnummer: WO 2021/180335

(56) Entgegenhaltungen:
- EP-A1- 2 127 840
- EP-A1- 3 369 768
- JP-A- 2008 207 544
- JP-A- 2008 207 545
- JP-A- 2009 286 817

## Beschreibung

Die Erfindung bezieht sich auf ein Verfahren zur Herstellung einer imprägnierte und unidirektional angeordnete Fasern enthaltenden Lage zu verwenden als Prepreg oder für einen Prepreg bestimmt für die Fertigung eines faserverstärkten Gegenstands, wobei Fasern nach Fertigung der Lage in mehreren zueinander beanstandeten Bereichen durchtrennt werden und wobei so gebildete Durchtrennungen innerhalb Begrenzungen des Prepregs verlaufen.

Auch nimmt die Erfindung Bezug auf ein Prepreg.

Faserverstärkte Bauteile haben gegenüber monolithischen Gegenständen den Vorteil, dass ein quasi-duktiles Druckverhalten erzielbar ist. Auch große Biegefestigkeiten lassen sich erzielen.

Für keramische Verbundwerkstoffe werden Prepregs benutzt, die ein- oder mehrlagig ausgebildet sein können. Um Prepregs herzustellen, ist es bekannt, hochtemperaturbeständige Endlosfaserbündel, sogenannte Rovings, einzusetzen, die aus Einzelfasern oder Einzelfilamenten mit einer Anzahl von bis zu 50.000 bestehen können. Als Fasern kommen insbesondere keramische Fasern wie Fasern aus Siliziumkarbid, Aluminiumoxid, Kohlenstoff, Mullit, in Frage, die in einer keramischen Matrix z. B. aus Siliziumkarbid, Aluminiumoxid, Kohlenstoff, Mullit, eingebettet sind.

Auch Kurzfasern können eingesetzt werden, die durch Spritzen mit einer keramische Partikel, Wasser, eine alkoholische Verbindung und einem Dispergator bestehenden Suspension zum Imprägnieren der Kurzfasern zusammengeführt werden (siehe z. B. EP 3 450 128 A1).

Der EP 2 848 599 B1 ist ein Verfahren zur Herstellung eines oxidkeramischen Verbundmaterials zu entnehmen, bei der Faserbündel mit einer mindestens zweidimensional zufälligen Ausrichtung ihrer Längsachse angeordnet sind.

Nachteilig entsprechender faserverstärkter Verbundwerkstoffe ist, dass es häufig Probleme bereitet, komplexe Formen herzustellen, insbesondere solche mit kleinen Krümmungsradien und/oder dicken Wandstärken, da der Aufbau innerer Spannungen und die Gefahr von Delaminationen besteht.

Auch sind oxidkeramische Prepregs bekannt, bei denen die Fasern in Form eines Gewebes oder eines Geleges zur Verfügung stehen. Nachteilig sind u.a. Faserverluste beim Zurechtschneiden der Prepregs.

Den Dokumenten EP 2 127 840 A1, JP 2009-286817 A, JP 2008-207545 A, JP 2008-207544 A, EP 3 369 768 A1 sind jeweils ein Verfahren zur Herstellung einer imprägnierte und unidirektional angeordnete Fasern enthaltenen Lage, die für Prepregs bestimmt ist. Dabei werden die Fasern nach Fertigung der Lage in mehreren zueinander beabstandeten Bereichen durchtrennt.

Der vorliegenden Erfindung liegt die Aufgabe zugrunde, ein Verfahren zur Herstellung einer Lage für die Fertigung von faserverstärkten Gegenständen sowie ein Zwischenprodukt für einen faserverstärkten Gegenstand derart weiterzubilden, dass auch komplexe Gegenstände hergestellt werden können, wobei der Aufbau von Eigenspannung vermieden und die Gefahr von Delaminationen verhindert werden soll.

Die aus den Lagen hergestellten Gegenstände sollen einen hohen E-Modul und eine geringe Bruchdehnung aufweisen.

Eine problemlose Drapierbarkeit der Lagen soll ermöglicht werden.

Die Fertigung von großvolumigen komplexen gekrümmten Bauteilen soll genauso möglich sein wie die Herstellung dünnwandiger Gegenstände.

Die Lösung der Aufgabe erfolgt durch die den Anspruch 1 zu entnehmenden Maßnahmen. Weiterbildungen ergeben sich aus den abhängigen Ansprüchen.

Die Lagen können z.B. in Wickeltechnik hergestellt werden, indem ein zuvor imprägnierter Roving, also Bündel von Fasern (Faserfilamente), auf einen Kern gewickelt wird, auf dessen Oberfläche z.B. zuvor eine Trägerfolie angeordnet wird.

Der durch Endlosfasern gebildete Roving wird imprägniert, indem der Roving zuvor durch eine Suspension bzw. einen Schlicker geführt wird, die bzw. der aus keramischen Partikeln, Wasser und einer alkoholischen Verbindung, insbesondere in Form von Glycerin, sowie eventuell einem Dispergiermittel und/oder eventuell einem organischen Bindemittel besteht.

Damit die Fasern vollständig und homogen mit dem Schlicker imprägniert werden, weist die Suspension bzw. der Schlicker vorzugsweise eine Viskosität < 1000 Pas, bevorzugt weniger als 100 Pas, insbesondere weniger als 50 Pas, auf bei einer Scherrate von 100 1/s. Die Viskosität kann beispielsweise bei einer Schergeschwindigkeit von 100 s⁻¹ und einer Temperatur von 20 °C mit Hilfe eines Koaxial-Zylinder-Rotationsviskosimeters bestimmt werden.

Alternative Möglichkeiten zum Imprägnieren der Fasern sind gleichfalls möglich, wie Aufsprühen des Schlickers, Gießen des Schlickers auf den unidirektional angeordneten Roving, um rein beispielhaft Alternativen zu nennen.

Die durch unidirektional verlaufenden, also parallel zueinander orientierten Faserfilamente, die von dem auch als Matrixvorläufer zu bezeichnenden Schlicker umgeben sind, bilden die Lage, bei der entsprechend der erfindungsgemäßen Lehre Fasern in vorgegebenen Bereichen durchtrennt worden sind.

Die Fixierung der konfektionierten unidirektionalen Faserfilamentelage erfolgt durch eine Trägerfolie.

Ein Durchtrennen der Fasern erfolgt in den Bereichen der Lage, die innerhalb der aus der Lage gebildeten Prepreg bzw. Prepregs verlaufen; denn eine Lage kann in ein oder mehrere Prepregs zugeschnitten werden. Selbstverständlich kann die Lage selbst als Prepreg benutzt werden.

Erfindungsgemäße Prepregs, die aus Lagen oder Abschnitten von Lagen bestehen, die aus von Schlicker umgebenen parallel orientierten Faserfilamenten bestehen, die ihrerseits nach der Bildung der Lage in gewünschten Bereichen durchtrennt worden sind, können auf geformte Träger gelegt werden, die ihrerseits die Negativgeometrie des herzustellenden faserverstärkten Gegenstands bzw. Bauteils vorgeben.

Bevorzugterweise ist vorgesehen, dass zuvor zumindest zwei oder mehrere erfindungsgemäße Lagen oder aus diesen hergestellte Prepregs aufeinandergelegt werden, wobei die Orientierung der Fasern einer Lage zu der der nachfolgenden Lage einen Winkel α > 0°, insbesondere α > 10°, bevorzugterweise 45°≤ α ≤ 90°, besonders bevorzugt α = 90°, einschließt, so dass sich eine bi- bzw. multidirektionale Faserarchitektur ergibt.

Die Durchtrennungen, also Schnitte, sind nicht durchgehend, wobei insbesondere vorgesehen ist, dass die Fasern unter einem Trennwinkel β zur Längsrichtung der Fasern durchtrennt werden, wobei 45° ≤ β ≤ 90°, vorzugsweise 60° ≤ β < 86°, insbesondere β = 75° oder β in etwa gleich 75°, betragen sollte.

Des Weiteren zeichnet sich die Erfindung dadurch aus, dass in Längsrichtung der Fasern betrachtet Abstand a zwischen aufeinanderfolgenden Durchtrennungen insbesondere beträgt 5 mm ≤ a ≤ 75 mm, bevorzugterweise 20 mm ≤ a ≤ 40 mm, besonders bevorzugt a gleich 30 mm oder in etwa gleich 30 mm.

Die Länge L einer Durchtrennung kann betragen 5 mm ≤ L ≤ 100 mm, bevorzugterweise 10 mm ≤ L ≤ 30 mm, besonders bevorzugt L gleich 25 mm oder in etwa gleich 25 mm. Die Durchtrennungen können einen geradlinigen Verlauf haben, ohne dass hierdurch die erfindungsgemäße Lehre eingeschränkt wird.

Insbesondere können die Durchtrennungen in Draufsicht auf die Lage eine Geometrie einer Geraden oder eines Wellenabschnitts oder eines Polygonzugabschnitts aufweisen.

Auch können unterschiedliche Schnittgeometrien für eine Lage zur Anwendung gelangen.

Das Durchtrennen kann durch geeignete Werkzeuge, wie Messer, Schneiden, Stempel oder werkzeuglos (Wasserstrahl, Laser) durchgeführt werden.

Insbesondere ist vorgesehen, dass als Fasern verwendet werden Fasern aus der Gruppe Glasfasern, Kohlenstofffasern, keramische Fasern, Kombination ein oder mehrerer dieser Fasern.

Die Erfindung zeichnet sich insbesondere auch dadurch aus, dass als Materialien für die Fasern verwendet werden Oxide, Mischoxide, Nitride, Carbonitride, insbesondere der Elemente Al, Si, Zr, Y, Mg, Ca oder Kohlenstoff, insbesondere Fasern aus der Gruppe Al₂O₃, SiO₂, ZrO₂, Y₂O₃, Y₂O₃ stabilisiertes ZrO₂, Yttrium-Aluminium-Granat, Mullit, Si₃N₄, SiC, SiCN, SiBNC oder Kombinationen zwei oder mehr dieser Materialien.

Bevorzugterweise werden als keramische Partikel als Matrixvorläuferkomponenten solche aus der Gruppe Al₂O₃, SiO₂, ZrO₂, Y₂O₃, Y₂O₃ stabilisiertem ZrO₂, Yttrium-Aluminium-Granat, Mullit, Si₃N₄, SiC, SiCN, SiBNC oder Kohlenstoff oder Silizium oder Kombinationen von zwei oder mehr solcher Materialien verwendet.

Die keramischen Partikel sollten in bimodaler Größenverteilung vorliegen, d.h. eine Partikelgrößenverteilung mit zwei Peaks, die sich nicht überlappen sollten. So kann ein Peak zwischen 0,05 µm bis 0,3 µm, bevorzugt zwischen 0,08 µm und 0,2 µm und ein Peak zwischen 0,5 µm und 3 µm, bevorzugt zwischen 0,7 µm und 1,2 µm liegen. Der erste Anteil ist der Feinanteil und der zweite der Grobanteil. Der Volumenanteil der Feinpartikel kann zwischen 3 Vol.-% bis 25 Vol.-% der Gesamtpartikel und der Volumenanteil der Grobpartikel zwischen 75 Vol.-% bis 77 Vol.-% der Gesamtpartikel betragen. Die Partikelgröße kann z.B. durch Laserstreuung bestimmt werden.

Der Anteil der keramischen Partikel kann zwischen 10 Vol.-% und 50 Vol.-% bezogen auf das Gesamtvolumen des Schlickers betragen. Der Anteil an organischen Additiven, z.B. alkoholische Verbindungen, insbesondere in Form von Glycerin, kann zwischen 10 Gew.-% und 35 Gew.-% bezogen auf das Gesamtgewicht der keramischen Partikel im Schlicker betragen.

Der Rest sollte Wasser sein, wobei gegebenenfalls ein Dispergator und/oder Bindemittel, Presshilfsmittel beigegeben sein kann.

Nach Aufeinanderlegen zwei oder mehrerer entsprechender flächiger Faserlagen, wobei die Orientierung der Faserfilamente der aufeinanderliegenden Lagen voneinander abweichen, insbesondere die Orientierung einer Lage zu der Orientierung nachfolgender Lage einen Winkel von 90° einschließt, können sodann als Prepreg (preimpregnated fibres, vorimprägnierte Faser-Matrixhalbzeuge) drapiert werden, z.B. durch Ablegen auf eine Form. Anschließend erfolgt eine Druckbeaufschlagung bei gleichzeitiger Trocknung, z.B. in einem Autoklav. Anschließend erfolgt das Sintern, z.B. im Temperaturbereich zwischen 1.000 °C und 1.300 °C für Verbundwerkstoffe mit oxidischen keramischen Fasern und bei einer Temperatur im Bereich zwischen 1.400 °C und 1.600 °C für Verbundwerkstoffe mit nicht oxidkeramischen Fasern.

Gegenstand der Erfindung ist auch die Herstellung von keramischen Verbundwerkstoffen mittels Prepreg-Technologie, wobei Faser-Rovings und eine flüssige Matrixvorläuferkomponente, die einen keramischen Füllstoff enthält, zum Einsatz gelangen. Dabei werden keramische Verbundwerkstoffe mit fertigungs- und werkstoffgerechter Faserarchitektur zur Verfügung gestellt, die ein schadenstolerantes Bruchverhalten und gute mechanische Eigenschaften aufweisen.

Die die Faserarchitektur der Prepregs bildenden erfindungsgemäßen Lagen bieten den Vorteil, dass der Laminiervorgang, also das Verbinden der einzelnen Lagen bzw. der aus den Lagen hergestellten Prepregs, erheblich erleichtert wird, da innere Spannungen vermieden bzw. reduziert werden, die ansonsten bei der Prozessierung bei chemischen und thermischen Prozessen (Sintern) zu Delaminationen führen können.

Es besteht die Möglichkeit, großvolumige Bauteile sowohl mit dünnen als auch mit dicken Wandstärken zur Verfügung zu stellen. Dicke Wandstärken sind möglich, da innere Spannungen vermieden werden. Das Vermeiden entsprechender Spannungen ist insbesondere dann erforderlich, wenn dickwandige Abschnitte zusätzlich gebogen oder mehrfach gekrümmt sind. Dünne Wandstärken sind möglich, da eine genaue präzise Ablage der einzelnen Lagen möglich ist.

Auch besteht die Möglichkeit, dass die Lagen tiefgezogen werden. Dies ermöglicht das Einformen von Radien mit geringen Durchmessern oder komplex mehrfach gebogenen Strukturen.

Erfindungsgemäß ist grundsätzlich vorgesehen, dass zumindest zwei unidirektional angeordnete und imprägnierte Fasern aufweisende flächige Faserlagen zu einer bi- bzw. multidirektionalen Faserarchitektur übereinander angeordnet werden.

Die Dicke einer jeden Faserlage sollte im Bereich zwischen 0,20 und 0,5 mm liegen, bevorzugt 0,4 mm.

Als Faser- also Faserfilamentdurchmesser ist ein Wert im Bereich von 10 µm zu bevorzugen. Der Faservolumengehalt der Fasern in jeder Lage sollte in etwa 30 bis 42 Vol.-% betragen.

Die einzelnen Lagen werden unter einem Winkel von mehr als 10°, bevorzugt von 90°, bezogen auf die Orientierung der parallel zueinander verlaufenden Fasern einer jeden Lage, zueinander ausgerichtet.

Unabhängig hiervon und erfindungsgemäß werden die Fasern innerhalb der unidirektionalen Faserlage vor dem Aufeinanderlegen der Lagen nach einem speziellen bzw. gewünschten Schnittmuster durchtrennt.

Mit anderen Worten werden die Fasern, die parallel zueinander ausgerichtet sind, undurchtrennt zueinander ausgerichtet, um sodann gezielt innerhalb des Bereiches der Lage durchtrennt zu werden, der für ein Prepreg benutzt wird.

Erfindungsgemäß wird ein multidirektionales Prepreg zur Verfügung gestellt, das aus einzelnen Prepreg-Lagen als die erfindungsgemäßen Lagen besteht, die ihrerseits eine unidirektionale Anordnung der Fasern aufweisen. Ferner sind die Fasern konfektioniert, d.h. innerhalb der jeweiligen Faserlage durchtrennt. Dabei erfolgen keine durchgehenden Schnitte, sondern es werden mehrere zueinander beabstandete Durchtrennungen vorgenommen, wobei diese jeweils eine Länge von 10 bis 30 mm aufweisen können.

Der auf einen Schnitt in Längsachsenrichtung der Fasern nachfolgende Schnitt kann versetzt sein, beispielhaft um einen Versatz von 10 bis 30 mm. Dabei sollten die Schnitte derart eingebracht werden, dass diese in Längsrichtung der Fasern betrachtet auch überlappend verlaufen können.

Sind bevorzugterweise gerade Durchtrennungen vorgesehen, so sind andere Geometrien gleichfalls möglich.

Nach dem Durchtrennen von Fasern einer Lage werden mindestens zwei unidirektionale und imprägnierte bzw. infiltrierte Faserlagen mit entsprechend durchtrennten, also konfektionierten Faserfilamenten zusammengefügt. So gebildete Prepregs halten ohne Hilfsmittel ungeachtet der Durchtrennung von Fasern zusammen, da die Orientierungen der unidirektionalen Lagen von Lage zu Lage einen Winkel einschließen, der größer 0° ist, bevorzugterweise 90° beträgt. Entsprechende multidirektionale Prepregs können sodann im gewünschten Umfang auf einer Form drapiert und auf diese z. B. in einem Autoklav gepresst werden.

Anschließend erfolgt ein Trocknen und Sintern, wie dies bei der Herstellung von keramischen Verbundwerkstoffen hinlänglich bekannt ist.

Überraschenderweise ergeben sich ungeachtet der durchtrennten Fasern gute mechanische Werte, die mit konventionellen gewebeverstärkten Verbundwerkstoffen vergleichbar sind.

Vorteilhaft ist auch, dass eine automatisierte Fertigung und Verarbeitung der Lagen zu Prepregs möglich ist.

Herstellungsgemäß wird insbesondere wie folgt vorgegangen. Zunächst wird eine unidirektionale Faserfilamentelage z. B. mittels Wickelanlage oder Ablegeanlage (Prepreganlage für unidirektionale Tapes) hergestellt. Hierzu werden ein oder mehrere Rovings benutzt, die insbesondere aus Einzelfilamenten einer Anzahl von z. B. 50.000 mit Durchmessern der Filamente im Bereich von 10 µm bestehen können. Ein entsprechender Roving wird sodann imprägniert, indem der Roving durch einen Schlicker geführt wird, der entsprechend zuvor erfolgter Ausführungen keramische Partikel, eine alkoholische Verbindung, insbesondere in Form von Glycerin, Wasser und gegebenenfalls einem Dispergator und/oder ein Bindemittel wie organisches Polymerbindemittel enthält. Der imprägnierte Roving kann sodann auf einen Kern gewickelt werden.

Es können Rovings jeglicher Denierzahl und Länge verarbeitet werden. Ein Verschnitt wie bei einer textiltechnischen Verarbeitung tritt nicht auf.

Die nach dem Wickeln von dem Kern entfernte und auf einer Trennfolie angeordnete Lage aus parallel zueinander verlaufenden infiltrierten Fasern wird bearbeitet, wobei nach einem gewünschten Schnittmuster die Fasern durchtrennt, also konfektioniert werden. Anschließend erfolgt ein Entfernen der Folie und ein Übereinanderlegen von mindestens zwei konfektionierten unidirektionalen Faserfilamentelagen, wobei die Orientierung der Fasern der Lagen zueinander einen Winkel α mit α > 10°, insbesondere einen Winkel von 90° einschließen, um ein bi- oder multidirektionales Prepreg zur Verfügung zu stellen.

Die erfindungsgemäße Lehre ist insbesondere für Werkstoffe von Interesse, bei denen hochmodulige Fasern mit geringer Bruchdehnung eingesetzt werden und die Matrix gleichfalls einen hohen E-Modul und geringe Bruchdehnung besitzt. Dies trifft insbesondere bei keramischen Verbunden zu. Außerdem ist der Prozess für füllstoffhaltige flüssige Matrixvorstufen von Vorteil.

Durch die Herstellung von unidirektionalen Faserfilamentelagen ist die Infiltration des Faserbündels sichergestellt. Die Faserfilamente liegen parallel angeordnet, gestreckt und nicht onduliert vor. Hierdurch ergibt sich der Vorteil, dass die keramischen Partikel der Matrixvorstufe, also des Schlickers, während der Prozessierung z. B. beim Autoklavprozess innerhalb des Faserbündels verbleiben, so dass die einzelnen Filamente sich nicht berühren.

Durch die erfindungsgemäße Lehre ergeben sich Prepregs mit einem Faservolumengehalt von 30 bis 42 Vol.-%. Eine belastungsgerechte Ausrichtung der Fasern wird ermöglicht.

Es kann reproduzierbar ein Verbundwerkstoff zur Verfügung gestellt werden, bei dem bi- oder multidirektionale Prepregs mit durchtrennten unidirektionalen Faserfilamentelagen zum Einsatz gelangen, wodurch eine vereinfachte Drapierung möglich ist.

Eigenspannung und Verzug des Bauteils werden vermieden, ein Vorteil, der insbesondere bei hochmoduligen Fasern und Matrices mit geringer Bruchdehnung erforderlich ist. Die Limitierung bei dickwandigen gekrümmten Wandungen sind dem Grunde nach nicht gegeben.

Komplexe Geometrien mit Radien von bis zu 1 mm, z. B. durch Tiefziehen, sind möglich.

Dünnwandige Platten können hergestellt werden, da die Prepregs genau und präzise abgelegt werden können.

Erfindungsgemäß wird ein keramischer Verbundwerkstoff mit fertigungsgerechten und werkstoffgerechten Prepregs hergestellt. Durch die Faserarchitektur der Prepregs werden keramische Verbundwerkstoffe mit schadenstolerantem Bruchverhalten zur Verfügung gestellt, wobei Verzug und innere Spannung vermieden bzw. reduziert werden. Ein Tiefziehen wird ermöglicht.

Durch die Faserarchitektur wird des Weiteren eine Partikelmigration in Faserbündelbereiche vermieden bzw. reduziert. Die Faserfilamente sind vollständig vom Matrixfüllstoff umgeben und weisen Kontaktstellen dem Grunde nach nicht auf.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung von den Zeichnungen zu entnehmenden bevorzugten Ausführungsbeispielen.

Es zeigen:
- Fig. 1: eine Prinzipdarstellung einer erfindungsgemäßen Lage mit einer ersten Art von Durchtrennungen,
- Fig. 2: eine erfindungsgemäße Lage mit einer zweiten Art von Durchtrennungen,
- Fig. 3: eine erfindungsgemäße Lage mit Zuschnittvorlagen,
- Fig. 4: eine mehrfach gekrümmte Struktur und
- Fig. 5: eine bogenförmige Struktur.

Anhand der Fig. ergeben sich weitere Einzelheiten und Vorteile der erfindungsgemäßen Lehre, die sich auf die Herstellung einer Lage beziehen, die für ein Prepreg bestimmt ist, mittels der ein keramischer Verbundwerkstoff hergestellt wird, der z.B. für eine Gießrinne, für eine Chargierhilfe für z. B. Aluminiumguss, für Wandungen und Auskleidungen für Fluggasturbinen, für Düsen für Brennertechnik, für geformte Teile für die Wärmebehandlung von Metallen zum Einsatz gelangen kann.

Die entsprechenden Gegenstände oder Bauteile können rein beispielhaft Längen zwischen 10 mm und 3.000 mm, Wandstärken im Bereich zwischen 0,5 mm und 10 mm und Krümmungsradien aufweisen, die bis zu 1 mm betragen können.

Insbesondere werden mehrere der erfindungsgemäßen Lagen übereinander angeordnet, um sodann - gegebenenfalls nach Zuschnitt gewünschter Geometrie - auf einen die Negativform eines herzustellenden Gegenstandes vorgebenden Träger gelegt bzw. drapiert zu werden, um anschließend in gewohnter Weise einem Vakuumpressvorgang und einem Sinterprozess unterzogen zu werden.

Ein Drapieren ohne Träger ist gleichfalls möglich.

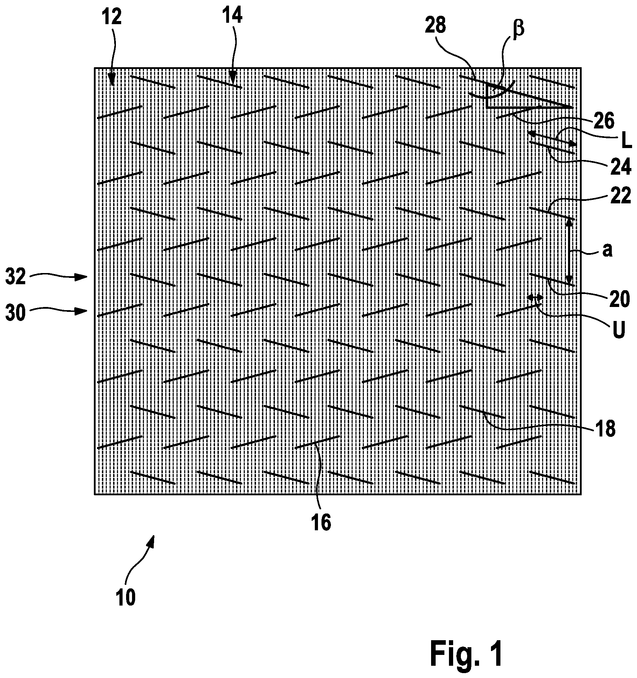

In Fig. 1 ist eine erfindungsgemäße unidirektionale Lage 10 rein prinzipiell dargestellt, die aus parallel zueinander verlaufenden Fasern oder Faserfilamenten 12, 14 besteht, die - wie bei der Herstellung faserverstärkter Bauteile bekannt - zuvor imprägniert worden sind.

Hierzu kann beispielsweise ein Faserbündel (Roving), das aus 500 bis 50.000 Einzelfilamenten bestehen kann, auf einen Kern gewickelt werden, wobei der Roving vor dem Ablegen mit einem Schlicker infiltriert, d.h. imprägniert worden ist.

Die Fasern 12, 14 können aus einem oder mehreren der Oxide, Mischoxide, Nitride, Carbonitride, insbesondere der Elemente Al, Si, Zr, Y, Mg, Ca oder Kohlenstoff, insbesondere aus Fasern aus der Gruppe Al₂O₃, SiO₂, ZrO₂, Y₂O₃, Y₂O₃ stabilisiertem ZrO₂, Yttrium-Aluminium-Granat, Mullit, Si3N4, SiC, SiCN, SiBNC oder Kombinationen zwei oder mehr dieser Materialien bestehen.

Zum Imprägnieren wird ein Schlicker benutzt, der keramische Partikel enthält, insbesondere solche aus der Gruppe Oxide, Mischoxide, Nitride, Carbonitride, insbesondere der Elemente Al, Si, Zr, Y, Mg, Ca oder Kohlenstoff, insbesondere Al₂O₃, SiO₂, ZrO₂, Y₂O₃, Y₂O₃ stabilisiertem ZrO₂, Yttrium-Aluminium-Granat, Mullit, Si₃N₄, SiC, SiCN, SiBNC oder Kohlenstoff oder Silizium oder Kombinationen von zwei oder mehr solcher Materialien.

Insbesondere wird ein Schlicker benutzt, der vorzugsweise 10 Vol.-% bis 40 Vol.-%, bezogen auf das Gesamtvolumen des Schlickers, keramische Partikel und 10 Gew.-% bis 35 Gew.-%, bezogen auf das Gesamtgewicht der keramischen Partikel im Schlicker, Glycerin, ein organisches Bindemittel, bis zu 2 Gew.-%, bezogen auf den Gesamtfeststoffgehalt des Schlickers, und Wasser enthält.

Nach Entfernen des auf den Kern gewickelten infiltrierten Rovings ergibt sich die Lage 10 mit den parallel zueinander verlaufenden Faserfilamenten 12, 14, wobei die Faserbündel nicht mehr einzeln differenzierbar sind.

Der Roving sollte derart um den Kern gewickelt sein, dass sich eine Lagendicke zwischen 0,1 mm bis 10 mm, vorzugsweise zwischen 0,2 mm bis 0,5 mm, ergibt. Bevorzugterweise sollte die Lage 10 eine Dicke von 0,4 mm aufweisen. Die Dicke der Lage ergibt sich aus der Denierzahl der verwendeten Rovings und den Einstellungen z.B. Wickelprozess.

Die Imprägnierung und die Faserlagedichte sollte derart erfolgen, dass sich ein Faservolumengehalt zwischen 20 Vol.-% und 60 Vol.-%, insbesondere zwischen 30 Vol.-% und 42 Vol.-%, ergibt.

Die entsprechenden Fasern 12, 14 sollten auf einer Trennfolie angeordnet sein.

Entsprechend der erfindungsgemäßen Lehre werden die Fasern 12, 14 bereichsweise durchtrennt. Entsprechende Trennschnitte sind beispielhaft mit den Bezugszeichen 16, 18, 20, 22, 24, 26, 28 gekennzeichnet.

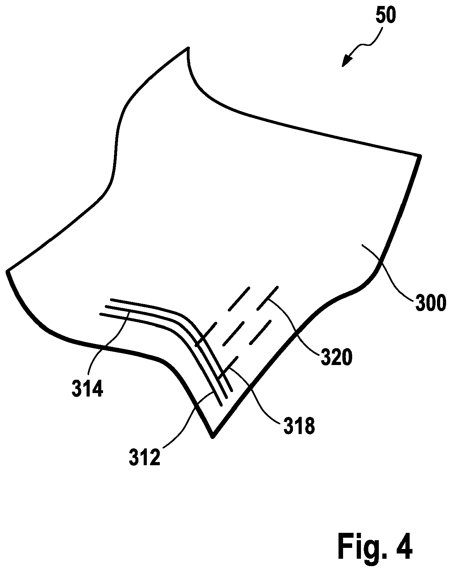

Die Durchtrennungen 16, 18, 20, 22, 24, 26, 28 - nachstehend vereinfacht Schnitte genannt -, weisen entsprechend der Darstellung in Fig. 4 bevorzugt folgende Anordnung auf.

So sind im Ausführungsbeispiel die Schnitte aufeinanderfolgender Reihen 30, 32 entgegengesetzt orientiert.

Ferner verlaufen die Schnitte unter einem Winkel β zur Längsachsenrichtung der Fasern 12, 14, der zwischen 45° und 90° liegen kann. Ein bevorzugter Winkel β ist 75°.

Die Länge L der Schnitte 16, 18, 20, 22, 24, 26, 28 sollte zwischen 5 mm und 100 mm, bevorzugterweise im Bereich von 25 mm, liegen.

Der Abstand a zwischen zwei gleich orientierten Schnitten 20, 22 sollte im Bereich zwischen 5 mm und 75 mm, bevorzugterweise im Bereich von 30 mm, liegen.

Des Weiteren sollten sich Schnitte aufeinanderfolgender Reihen 30, 32 überlappen (Doppelpfeil U), wie dies aus der zeichnerischen Darstellung erkennbar ist. Die Überlappung U in Prozent sollte zwischen 0 % bis 90 %, insbesondere im Bereich von <16 %, liegen, so dass entsprechend der zeichnerischen Darstellung der Fig. 1, nach der die Schnitte 16, 18, 20, 22, 24, 26, 28 die Fasern 12, 14 unter einem Winkel +/- 75° schneiden, die Überlappung 5 mm beträgt.

Sind im Ausführungsbeispiel die Schnitte 16, 18, 20, 22, 24, 26, 28 gradlinig, so kommen andere Schnittgeometrien, wie Wellen, Polygonzüge, Wellenabschnitte oder ähnliches gleichfalls in Frage.

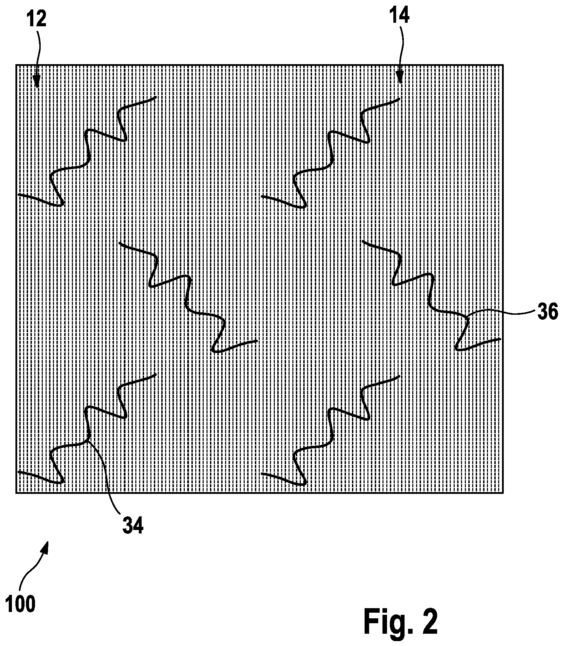

Auch können Schnitte unregelmäßige Geometrien aufweisen, wie dies anhand der Fig. 2 verdeutlicht wird. So sind die Fasern 12, 14 durch eine unregelmäßige Wellengeometrie aufweisende Schnitte 34, 36 durchtrennt.

Nach Durchtrennen der Fasern 12, 14 werden entsprechend konfektionierte Lagen aufeinandergelegt, wobei die Orientierung der Fasern einer Lage zu der Orientierung der unidirektionalen Fasern der anderen Lage einen Winkel α einschließt, der größer als 10° betragen, insbesondere bei 90° liegen sollte.

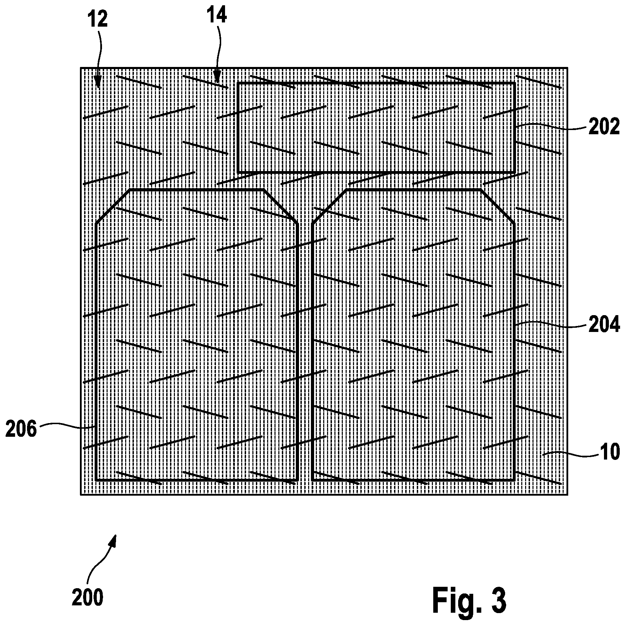

Aus einem entsprechenden Lagenstapel können sodann Prepregs zugeschnitten werden, wie dies in Fig. 3 rein prinzipiell dargestellt ist. So können aus einem entsprechenden Stapel 200 von Lagen, von denen die oberste in Bezug auf die Schnitte der Lage 10 entspricht, Prepregs 202, 204, 206 zugeschnitten werden, um diese sodann zu drapieren, z.B. durch Legen auf eine Form. Dabei können auch mehrere entsprechende Prepregs übereinandergelegt werden.

Erkennbar verlaufen die Fasern durchtrennende Schnitte innerhalb der Zuschnitte für die Prepregs 202, 204, 206.

Anschließend erfolgt in gewohnter Weise durch Vakuumpressen ein Laminieren, wobei ein Restdruck im Bereich zwischen 2 kPa bis 40 kPa herrschen sollte. Dabei kann ein Vakuumtrocknen bei einer Temperatur von z.B. 60 °C bis 140 °C erfolgen.

Schließlich wird der so erhaltene Körper gesintert, wobei Temperaturen im Bereich zwischen 1.100 °C und 1.300 °C bevorzugt sind.

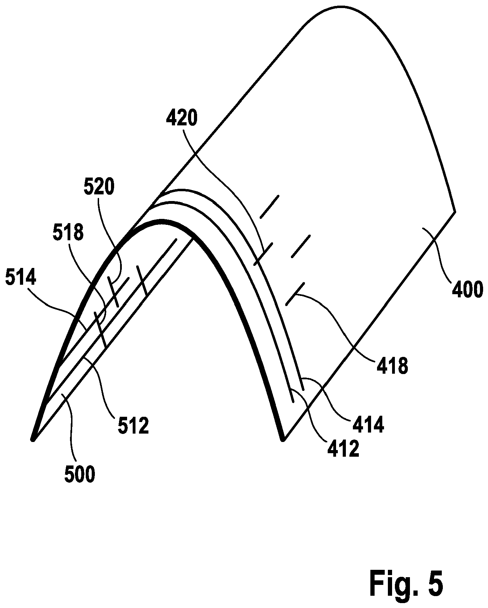

Anhand der Fig. 4 und 5 sollen rein beispielhaft Formkörper dargestellt werden, die aus erfindungsgemäß hergestellten Lagen bzw. aus diesen gebildeten Prepregs hergestellt sind.

So ist in Fig. 4 eine Schicht 300 eines Körpers dargestellt, der mehrfach gekrümmt ist. Prinzipiell ist die unidirektionale Lage 300 mit den parallel zueinander verlaufende Faserfilamenten 312, 314 dargestellt, die in der vereinfachten Darstellung durch senkrecht zu deren Längsrichtung verlaufende Schnitte 318, 320 durchtrennt sind.

In Fig. 5 ist ein aus zwei Lagen 400, 500 bestehendes Prepreg dargestellt, dessen parallel zueinander verlaufende Fasern 412, 414 der Lage 400 sich senkrecht zu den parallel zueinander verlaufenden Fasern 512, 514 der Lage 500 erstrecken. Auch sind die Fasern 412, 414, 512, 514 durchtrennt, wie durch die Schnitte 418, 420, 518, 520 angedeutet wird.

Durch die Ausbildung entsprechender Lagen 400, 500 kann ein Prepreg und damit ein Verbundkörper hergestellt werden, der stark gebogen ist, wobei Radien bis zu 1 mm möglich sind.

## Patentansprüche

1. Verfahren zur Herstellung einer imprägnierte und unidirektional angeordnete Fasern (12, 14, 312, 314, 412, 414, 512, 514) enthaltenden Lage (10, 300, 400, 500) zu verwenden als Prepreg oder für einen Prepreg (202, 204, 206) bestimmt für die Fertigung eines faserverstärkten Gegenstands, wobei Fasern nach Fertigung der Lage in mehreren zueinander beanstandeten
Bereichen durchtrennt werden und wobei so gebildete Durchtrennungen (16, 18, 20, 22, 24, 26, 28, 318, 320, 418, 420, 518. 520) innerhalb Begrenzungen des Prepregs verlaufen, **gekennzeichnet durch** Verfahrensschritte:
- Imprägnieren der Fasern (12, 14, 312, 314, 412, 414, 512, 514) mit einem Schlicker enthaltend
- 10 Vol-% bis 50 Vol.-%, bezogen auf das Gesamtvolumen des Schlickers, keramischer Partikel, wobei als keramische Partikel solche aus der Gruppe Oxide, Mischoxide, Nitride, Carbonitride der Elemente Al, Si, Zr, Y, Mg, Ca oder Kohlenstoff verwendet werden,
- Wasser,
- 10 Gew.-% bis 35 Gew.-%, bezogen auf das Gesamtgewicht der keramischen Partikel im Schlicker, alkoholische Verbindung, wie Glyzerin,
- Anordnen der so hergestellten Lage auf einem Trägerelement und anschließendes Durchtrennen der Fasern.

2. Verfahren nach Anspruch 1,
**dadurch gekennzeichnet,**
**dass** die Fasern (12, 14, 312, 314, 412, 414, 512, 514) unter einem Trennwinkel β zur Längsachse der Fasern durchtrennt werden mit 45° ≤ β ≤ 90°, vorzugsweise 60° ≤ β ≤ 86°, besonders bevorzugt β gleich oder in etwa gleich 75°.

3. Verfahren nach Anspruch 1 oder 2,
**dadurch gekennzeichnet, dass** in Längsrichtung der Fasern (12,14,312,314,412,414,512,514) betrachtet Abstand a zwischen aufeinanderfolgenden Durchtrennungen (16,18,20,22,24,26, 28, 318, 320, 418, 420, 518, 520) beträgt 5 mm ≤ a ≤ 75 mm, insbesondere 20 mm ≤ a ≤ 40 mm, bevorzugt a gleich oder in etwa gleich 30 mm und/oder dass Länge L einer Durchtrennung beträgt 5 mm ≤ L ≤ 100 mm, insbesondere 10 mm ≤ L ≤ 30 mm, bevorzugterweise L gleich oder in etwa gleich 25 mm.

4. Verfahren nach zumindest einem der vorhergehenden Ansprüche,
**dadurch gekennzeichnet,**
**dass** in Längsrichtung der Fasern (12, 14, 312, 314, 412, 414, 512, 514) betrachtet aufeinanderfolgende Reihen (30, 32) von Durchtrennungen (16, 18, 20, 22, 24, 26, 28, 318, 320, 418, 420, 518, 520) entgegengesetzt orientiert verlaufen und/oder dass in Längsrichtung der Fasern betrachtet aufeinanderfolgende Durchtrennungen sich über eine Länge U überlappen, insbesondere über eine Länge in Prozent mit 0 ≤ U ≤ 90, insbesondere 0 ≤ U ≤ 20, besonders bevorzugt U gleich oder kleiner 16.

5. Verfahren nach zumindest einem der vorhergehenden Ansprüche,
**dadurch gekennzeichnet,**
**dass** in Draufsicht auf die Lage (10, 300, 400, 500) die Durchtrennung (16, 18, 20, 22, 24, 26, 28, 318, 320, 418, 420, 518, 520) die Geometrie einer Geraden, eines Wellenabschnitts, eines Polygonzugabschnitts oder einer Kombination einer oder mehrerer dieser Elemente aufweist.

6. Verfahren nach zumindest einem der vorhergehenden Ansprüche,
**dadurch gekennzeichne**t,
dass die Lage (10, 300, 400, 500) auf eine Trägerfolie als das Trägerelement angeordnet ist oder wird.

7. Verfahren nach zumindest einem der vorhergehenden Ansprüche,
**dadurch gekennzeichnet,**
**dass** als die Fasern (12, 14, 312, 314, 412, 414, 512, 514) Fasern eines Faserbündels verwendet werden, wobei das Faserbündel aus 500 bis 50.000, insbesondere aus 3.000 bis 7.000, besonders bevorzugterweise aus in etwa 5.000 Fasern besteht.

8. Verfahren nach zumindest einem der vorhergehenden Ansprüche,
**dadurch gekennzeichnet,**
**dass** als Fasern (12, 14, 312, 314, 412, 414, 512, 514) verwendet werden Fasern aus der Gruppe Glasfasern, Kohlenstofffasern, keramische Fasern, Kombination ein oder mehrerer dieser Fasern.

9. Verfahren nach zumindest einem der vorhergehenden Ansprüche,
**dadurch gekennzeichnet,**
**dass** als Materialien für die Fasern (12, 14, 312, 314, 412, 414, 512, 514) verwendet werden Oxide, Mischoxide, Nitride, Carbonitride, insbesondere der Elemente Al, Si, Zr, Y, Mg, Ca oder Kohlenstoff, insbesondere Fasern aus der Gruppe Al₂O₃, SiO₂, ZrO₂, Y₂O₃, Y₂O₃ stabilisiertem ZrO₂, Yttrium-Aluminium-Granat, Mullit, Si₃N₄, SiC, SiCN, SiBNC oder Kombinationen zwei oder mehr dieser Materialien.

10. Verfahren nach zumindest einem der vorhergehenden Ansprüche,
**dadurch gekennzeichnet,**
**dass** als keramische Partikel solche aus der Gruppe Al₂O₃, SiO₂, ZrO₂, Y₂O₃, Y₂O₃ stabilisiertem ZrO₂, Yttrium-Aluminium-Granat, Mullit, Si₃N₄, SiC, SiCN, SiBNC oder Kohlenstoff oder Silizium oder Kombinationen von zwei oder mehr solcher Materialien verwendet werden.

11. Verfahren zur Herstellung eines Prepregs (202, 204, 206) unter Verwendung mehrere Lagen (10, 300, 400, 500) nach zumindest Anspruch 6, wobei Lagen derart übereinander gelegt werden, dass die Orientierung der unidirektionalen Fasern aufeinanderfolgender Lagen einen Winkel α mit α > 0°, insbesondere 30° ≤ α ≤ 90°, bevorzugt α = 90°, einschließen, wobei die Trägerfolien vor dem Aufeinanderlegen der Lagen entfernt werden.

12. Prepreg (202, 204, 206) bestehend aus einer oder mehrerer Lagen (10, 300, 400, 500) oder enthaltend diese hergestellt nach zumindest einem der vorhergehenden Ansprüche.

13. Prepreg nach Anspruch 12,
**dadurch gekennzeichnet,**
**dass** das Prepreg (10, 300, 400, 500) mehrere Lagen (10, 300, 400, 500) aufweist, wobei die Orientierungen der unidirektionalen Fasern (12, 14, 312, 314, 412, 414, 512, 514) von aufeinanderfolgenden Lagen einen Winkel α mit α > 0°, insbesondere 30° ≤ α ≤ 90°, bevorzugt α = 90°, einschließen und die Lagen vorzugsweise trägerfolienlos sind.

14. Prepreg nach Anspruch 12 oder 13,
**dadurch gekennzeichnet,**
**dass** die Lage des Prepregs (10, 300, 400, 500) eine Dicke d mit 0,5 mm ≤ d ≤ 1 mm, insbesondere 0,2 mm ≤ d ≤ 0,5 mm, besonders bevorzugt d gleich oder in etwa gleich 0,4 mm, aufweist.

15. Prepreg nach zumindest einem der Ansprüche 12 bis 14,
**dadurch gekennzeichnet,**
**dass** die Faser (12, 14, 312, 314, 412, 414, 512, 514) einen Durchmesser D mit 5 µm ≤ D ≤ 20 µm, insbesondere D gleich oder in etwa gleich 10 µm aufweist.

## Claims

1. A method for producing a layer (10, 300, 400, 500) containing impregnated and unidirectionally arranged fibres (12, 14, 312, 314, 412, 414, 512, 514) for use as a prepreg or for a prepreg (202, 204, 206) intended for the production of a fibre-reinforced object, wherein fibres are cut through after production of the layer in several areas at a distance to one another, and wherein cuts (16, 18, 20, 22, 24, 26, 28, 318, 320, 418, 420, 518, 520) formed in this way extend within limits of the prepreg, **characterized by** the method steps:
- Impregnation of the fibres (12, 14, 312, 314, 412, 414, 512, 514) with a slip containing
- 10 % v/v to 50 % v/v of ceramic particles, relative to the total volume of the slip, wherein the ceramic particles used are those from the group of oxides, mixed oxides, nitrides, carbonitrides of the elements Al, Si, Zr, Y, Mg, Ca, or carbon,
- water,
- 10 % v/v to 35 % v/v of alcoholic compound, such as glycerol, relative to the total weight of the ceramic particles in the slip,
- Arrangement of the layer produced in this way on a carrier element and subsequent cutting through of the fibres.

2. The method according to claim 1,
**characterized in**
**that** the fibres (12, 14, 312, 314, 412, 414, 512, 514) are cut through at a cutting angle β, relative to the longitudinal axis of the fibres, of 45° ≤ β < 90°, preferably of 60° ≤ β < 86°, particularly preferably where β is equal to or approximately equal to 75°.

3. The method according to claim 1 or 2,
**characterized in**
**that** when viewed in the longitudinal direction of the fibres (12, 14, 312, 314, 412, 414, 512, 514), the distance a between consecutive cuts (16, 18, 20, 22, 24, 26, 28, 318, 320, 418, 420, 518, 520) is 5 mm ≤ a ≤ 75 mm, in particular 20 mm ≤ a ≤ 40 mm, preferably where a is equal to or approximately equal to 30 mm and/or that the length L of a cut is 5 mm ≤ L ≤ 100 mm, in particular 10 mm ≤ L ≤ 30 mm, preferably where L is equal to or approximately equal to 25 mm.

4. The method according to at least one of the preceding claims, **characterized in**
**that** when viewed in the longitudinal direction of the fibres (12, 14, 312, 314, 412, 414, 512, 514), consecutive rows (30, 32) of cuts (16, 18, 20, 22, 24, 26, 28, 318, 320, 418, 420, 518, 520) are oppositely oriented and/or that when viewed in the longitudinal direction of the fibres, consecutive cuts overlap over a length U, in particular over a length in percent of 0 ≤ U ≤ 90, in particular of 0 ≤ U ≤ 20, particularly preferably where U is equal to or less than 16.

5. The method according to at least one of the preceding claims, **characterized in**
**that** in a plan view onto the layer (10, 300, 400, 500), the cut (16, 18, 20, 22, 24, 26, 28, 318, 320, 418, 420, 518, 520) has the geometry of a straight line, of a wave section, of a polygonal chain section or of a combination of one or more of these elements.

6. The method according to at least one of the preceding claims, **characterized in**
**that** the layer (10, 300, 400, 500) is arranged on a carrier film as the carrier element.

7. The method according to at least one of the preceding claims, **characterized in**
**that** the fibres (12, 14, 312, 314, 412, 414, 512, 514) used are fibres of a fibre bundle, wherein the fibre bundle consists of 500 to 50,000, in particular of 3,000 to 7,000, particularly preferably of approximately 5,000 fibres.

8. The method according to at least one of the preceding claims, **characterized in**
**that** the fibres (12, 14, 312, 314, 412, 414, 512, 514) used are fibres from the group of glass fibres, carbon fibres, ceramic fibres, or a combination of one or more of these fibres.

9. The method according to at least one of the preceding claims, **characterized in**
**that** the materials used for the fibres (12, 14, 312, 314, 412, 414, 512, 514) are oxides, mixed oxides, nitrides, carbonitrides, in particular of the elements Al, Si, Zr, Y, Mg, Ca or carbon, in particular fibres from the group of Al₂O₃, SiO₂, ZrO₂, Y₂O₃, Y₂O₃ stabilized ZrO₂, yttrium aluminium garnet, mullite, Si₃N₄, SiC, SiCN, SiBNC or combinations of two or more of these materials.

10. The method according to at least one of the preceding claims, **characterized in**
**that** the ceramic particles used are those from the group of Al₂O₃, SiO₂, ZrO₂, Y₂O₃, Y₂O₃ stabilized ZrO₂, yttrium aluminium garnet, mullite, Si₃N₄, SiC, SiCN, SiBNC or carbon or silicon or combinations of two or more of such materials.

11. A method for producing a prepreg (202, 204, 206) using several layers (10, 300, 400, 500) according to at least claim 6, wherein layers are laid one above the other such that the orientation of the unidirectional fibres of consecutive layers form an angle α of α > 0°, in particular of 30° ≤ α ≤ 90°, preferably of α = 90°, wherein the carrier films are removed prior to laying the layers one above the other.

12. A prepreg (202, 204, 206) consisting of one or more layers (10, 300, 400, 500) or containing such produced according to at least one of the preceding claims.

13. The prepreg according to claim 12,
**characterized in**
**that** the prepreg (10, 300, 400, 500) has several layers (10, 300, 400, 500), wherein the orientations of the unidirectional fibres (12, 14, 312, 314, 412, 414, 512, 514) of consecutive layers form an angle α of α > 0°, in particular of 30° ≤ α ≤ 90°, preferably of α = 90°, and the layers are preferably free of carrier films.

14. The prepreg according to claim 12 or 13,
**characterized in**
**that** the layer of the prepreg (10, 300, 400, 500) has a thickness d of 0.5 mm ≤ d ≤ 1 mm, in particular of 0.2 mm ≤ d ≤ 0.5 mm, particularly preferably where d is equal to or approximately equal to 0.4 mm.

15. The prepreg according to at least one of claims 12 to 14, **characterized in**
**that** the fibres (12, 14, 312, 314, 412, 414, 512, 514) have a diameter D of 5 µm ≤ D ≤ 20 µm, in particular where D is equal to or approximately equal to 10 µm.

## Revendications

1. Procédé pour fabriquer une couche (10, 300, 400, 500) imprégnée et contenant des fibres (12, 14, 312, 314, 412, 414, 512, 514) disposées unidirectionnellement, à utiliser comme préimprégné ou destinée à un préimprégné (202, 204, 206) pour la fabrication d'un objet renforcé par fibres, sachant que des fibres sont sectionnées dans différentes zones éloignées les unes des autres, après la fabrication de la couche et sachant que les sectionnements ainsi obtenus (16, 18, 20, 22, 24, 26, 28, 318, 320, 418, 420, 518, 520) s'étendent à l'intérieur des limites du préimprégné, **caractérisé par** les étapes de procédé suivantes :
- imprégnation des fibres (12, 14, 312, 314, 412, 414, 512, 514) avec une suspension contenant
- 10 vol-% à 50 vol-%, par rapport au volume total de la suspension, de particules céramiques, sachant que sont utilisées comme particules céramiques celles du groupe des oxydes, oxydes mixtes, nitrures, carbonitrures des éléments Al, Si, Zr, Y, Mg, Ca ou carbone,
- de l'eau,
- 10 à 35 % en poids, par rapport au poids total des particules céramiques dans la suspension, de composé alcool, tel que la glycérine,
- disposition de la couche ainsi fabriquée sur un élément support, puis sectionnement des fibres.

2. Procédé selon la revendication 1,
**caractérisé en ce**
**que** les fibres (12, 14, 312, 314, 412, 414, 512, 514) sont sectionnées à un angle de coupe β par rapport à l'axe longitudinal des fibres, avec 45° ≤ β ≤ 90°, de préférence 60° ≤ β ≤ 86°, et en particulier β est égal ou à peu près égal à 75°.

3. Procédé selon la revendication 1 ou 2,
**caractérisé en ce**
**qu'**observé dans le sens longitudinal des fibres (12, 14, 312, 314, 412, 414, 512, 514), l'écart a entre des sectionnements (16, 18, 20, 22, 24, 26, 28, 318, 320, 418, 420, 518, 520) successifs est tel que 5 mm ≤ a ≤ 75 mm, notamment 20 mm ≤ a ≤ 40 mm, de préférence a est égal ou à peu près égal à 30 mm et/ou que la longueur L d'un sectionnement est telle que 5 mm ≤ L ≤ 100 mm, notamment 10 mm ≤ L ≤ 30 mm, de préférence L est égal ou à peu près égal à 25 mm.

4. Procédé selon au moins l'une des revendications précédentes, **caractérisé en ce**
**qu'**observé dans le sens longitudinal des fibres (12, 14, 312, 314, 412, 414, 512, 514), des rangées successives (30, 32) de sectionnements (16, 18, 20, 22, 24, 26, 28, 318, 320, 418, 420, 518, 520) s'étendent dans le sens opposé et/ou qu'observé dans le sens longitudinal des fibres, des sectionnements consécutifs se chevauchent sur une longueur U, notamment sur une longueur en pourcentage avec 0 ≤ U ≤ 90, notamment 0 ≤ U ≤ 20, et en particulier U est inférieur ou égal à 16.

5. Procédé selon au moins l'une des revendications précédentes, **caractérisé en ce**
**qu'**en vue de dessus sur la couche (10, 300, 400, 500), le sectionnement (16, 18, 20, 22, 24, 26, 28, 318, 320, 418, 420, 518, 520) présente la géométrie d'une droite, d'une section d'onde, d'une section d'un tracé polygonal ou d'une combinaison d'un ou de plusieurs de ces éléments.

6. Procédé selon au moins l'une des revendications précédentes, **caractérisé en ce**
**que** la couche (10, 300, 400, 500) est ou sera disposée sur un film support comme élément support.

7. Procédé selon au moins l'une des revendications précédentes, **caractérisé en ce**
**que** sont utilisées pour les fibres (12, 14, 312, 314, 412, 414, 512, 514) des fibres d'un faisceau de fibres, sachant que le faisceau de fibres se compose de 500 à 50 000, notamment de 3 000 à 7 000 fibres, et en particulier de préférence de 5 000 fibres.

8. Procédé selon au moins l'une des revendications précédentes,
**caractérisé en ce**
**que** sont utilisées comme fibres (12, 14, 312, 314, 412, 414, 512, 514) des fibres du groupe des fibres de verre, des fibres de carbone, des fibres céramiques, une combinaison d'une ou de plusieurs de ces fibres.

9. Procédé selon au moins l'une des revendications précédentes,
**caractérisé en ce**
**que** sont utilisées comme matériaux pour les fibres (12, 14, 312, 314, 412, 414, 512, 514) des oxydes, des oxydes mixtes, des nitrures, des carbonitrures notamment des éléments Al, Si, Zr, Y, Mg, Ca ou carbone, notamment des fibres du groupe Al₂O₃, SiO₂, ZrO₂, Y₂O₃, ZrO₂ stabilisé au Y₂O₃, grenat d'yttrium et d'aluminium, mullite, Si₃N₄, SiC, SiCN, SiBNC ou des combinaisons de deux de ces matériaux ou plus.

10. Procédé selon au moins l'une des revendications précédentes,
**caractérisé en ce**
**que** sont utilisées comme particules céramiques des particules du groupe Al₂O₃, SiO₂, ZrO₂, Y₂O₃, ZrO₂ stabilisé au Y₂O₃, grenat d'yttrium et d'aluminium, mullite, Si₃N₄, SiC, SiCN, SiBNC ou carbone ou silicium ou des combinaisons de deux de ces matériaux ou plus.

11. Procédé de fabrication d'un préimprégné (202, 204, 206) utilisant plusieurs couches (10, 300, 400, 500) selon au moins la revendication 6, sachant que les couches sont superposées de sorte que l'orientation des fibres unidirectionnelles des couches successives forme un angle α avec α > 0°, notamment 30° ≤ α ≤ 90°, de préférence α = 90°, sachant que les films supports sont retirés avant de superposer les couches.

12. Préimprégné (202, 204, 206) se composant d'une ou de plusieurs couches (10, 300, 400, 500) ou contenant celles-ci, fabriqué selon au moins l'une des revendications précédentes.

13. Préimprégné selon la revendication 12,
**caractérisé en ce**
**que** le préimprégné (10, 300, 400, 500) présente plusieurs couches (10, 300, 400, 500), sachant que les orientations des fibres unidirectionnelles (12, 14, 312, 314, 412, 414, 512, 514) des couches successives forment un angle α avec α > 0°, notamment 30° ≤ α ≤ 90°, de préférence α = 90°, et que les couches sont de préférence sans film support.

14. Préimprégné selon la revendication 12 ou 13,
**caractérisé en ce**
**que** la couche du préimprégné (10, 300, 400, 500) présente une épaisseur d avec 0,5 mm ≤ d ≤ 1 mm, notamment 0,2 mm ≤ d < 0,5 mm, et en particulier d est égal ou à peu près égal à 0,4 mm.

15. Préimprégné selon au moins l'une des revendications 12 à 14, **caractérisé en ce**
**que** les fibres (12, 14, 312, 314, 412, 414, 512, 514) présentent un diamètre D avec 5 µm ≤ D ≤ 20 µm, notamment D est égal ou à peu près égal à 10 µm.
